# EUROPEAN PATENT APPLICATION

(11) **EP 2 136 424 A1**
(43) Date of publication of application: **23.12.2009**
(21) Application number: 09159696.5
(22) Date of filing: 07.05.2009
(51) Int. Cl.: H01M 2/22, H01M 10/40

(54) **Tab for a Lithium Secondary Battery**

(30) Priority: 20.06.2008 US 74562 P; 22.12.2008 US 341936
(71) Applicant: Samsung SDI Co., Ltd., Gyeonggi-do (KR)
(72) Inventor: Cha, Seungyeob, Gyeonggi-do (KR)
(74) Representative: Walaski, Jan Filip

(57) **Abstract**

A secondary battery includes a can and an electrode assembly within the can. The electrode assembly has a first electrode plate, a second electrode plate and a separator between the first electrode plate and the second electrode plate, the first electrode plate having a coated portion coated with an active material and an uncoated portion absent the active material. The secondary battery also includes a cap assembly adapted to seal the can. An electrode tab electrically connects the uncoated portion of the first electrode plate to the cap assembly, the electrode tab having a bilayer structure including a copper layer and a nickel layer.

## Description

The present invention relates to an electrode assembly of a secondary battery, such as a lithium secondary battery.

Generally, a secondary battery is fabricated by housing an electrode assembly and an electrolyte in a can and hermetically sealing an open upper part of the can with a cap assembly.

In order to increase electrical capacity of the cap assembly, the electrode assembly may be configured to have a jelly roll structure by stacking a positive electrode plate, a negative electrode plate and a separator between the electrode plates to insulate the electrode plates from each other, and winding the resulting stacked structure into a jelly roll shape. Even though there may be some differences among types of secondary batteries, the positive and negative electrode plates are formed conventionally by applying an electrode active material to a metal substrate, followed by drying, roll pressing and cutting the metal substrate into plates. In the case of a lithium secondary battery, the positive electrode plate may employ a lithium transition metal oxide as an electrode active material, and aluminum (Al) as a current collector. The negative electrode plate may employ a carbon or carbon composite as an electrode active material, and copper (Cu) as a current collector. The separator serves to electrically isolate the positive electrode plate from the negative electrode plate to avoid a short circuit due to direct contact between two electrode plates. The separator may be formed of a microporous film of a polyolefin resin, such as polyethylene, polypropylene, or the like.

For electrical connection of the electrode assembly to the cap assembly, a positive electrode tab and a negative electrode tab is formed to protrude from an upper part of the electrode assembly. The positive and negative electrode tabs may be formed of, for example, aluminum (Al) or nickel (Ni). Conventionally, the positive electrode tab may be formed of aluminum (Al) or an aluminum alloy, whereas the negative electrode tab may be formed of nickel (Ni) or a nickel alloy.

However, a negative electrode tab made of nickel or nickel alloy suffers from problems associated with the production of a large amount of heat upon charging/discharging of the secondary battery, arising from high resistance of Ni per se. Further, since the welding portions between the negative electrode plate and the negative electrode tab and between the cap assembly and the negative electrode tab are connecting or joining regions of heterogeneous metal components, internal resistance (IR) increases to result in localization of heat generation. Local concentration of heat may, in turn, cause a high-temperature short circuit, thus causing danger of explosion of the secondary battery.

According to aspects of the present invention, a lithium secondary battery is provided capable of preventing a high-temperature short circuit by provision of a clad negative electrode tab having a nickel/copper bilayer structure. Additionally, a lithium secondary battery with reduced internal resistance and heat generation is provided.

In one embodiment, a secondary battery includes a can and an electrode assembly within the can. The electrode assembly has a first electrode plate, a second electrode plate and a separator between the first electrode plate and the second electrode plate, the first electrode plate having a coated portion coated with an active material and an uncoated portion absent the active material. The secondary battery also includes a cap assembly for sealing the can. A first electrode tab electrically connects the uncoated portion of the first electrode plate to the cap assembly, the first electrode tab having a bilayer structure including a copper layer and a nickel layer.

In one embodiment, the copper layer is pressure-welded to the nickel layer and the first electrode tab is a clad electrode tab. Further, the first electrode tab may exhibit a resistance from about 2.0 to 5.0 mΩ. A thickness of the first electrode tab may comprise between about 5% to 95% copper and between about 5% and 95% nickel, and in one embodiment may comprise about 50% copper and about 50% nickel. In another embodiment, a thickness of the copper layer is substantially the same as a thickness of the nickel layer

In one embodiment, a thickness of the first electrode tab is from about 0.05 mm to 0.15 mm. The first electrode tab may extend substantially parallel to the first electrode plate of the electrode assembly. Further, the first electrode tab may be welded to the uncoated portion of the first electrode plate so that the copper layer of the first electrode tab contacts the uncoated portion of the first electrode plate.

Embodiments of the invention will now be described by way of example with reference to the accompanying drawings, in which:
FIG. 1 is an exploded perspective view of a lithium secondary battery in accordance with an embodiment of the present invention.
FIG. 2a is a perspective view of an unwound electrode assembly in accordance with an embodiment of the present invention.
FIG. 2b is a perspective view of a wound electrode assembly in accordance with an embodiment of the present invention.
FIG. 2c is a plan view of an electrode assembly in accordance with an embodiment of the present invention.
FIG. 3a is a sectional view of a negative electrode tab in accordance with an embodiment of the present invention.
FIG. 3b is a plan view of a negative electrode tab in accordance with an embodiment of the present invention.
FIG. 4a is a graph showing the relationship between various negative electrode tabs and a heat generation temperature.
FIG. 4b is a graph showing the relationship between various negative electrode tabs and a depth of a thermal oxidation layer.

Exemplary embodiments of the present invention will now be described in more detail with reference to the accompanying drawings.

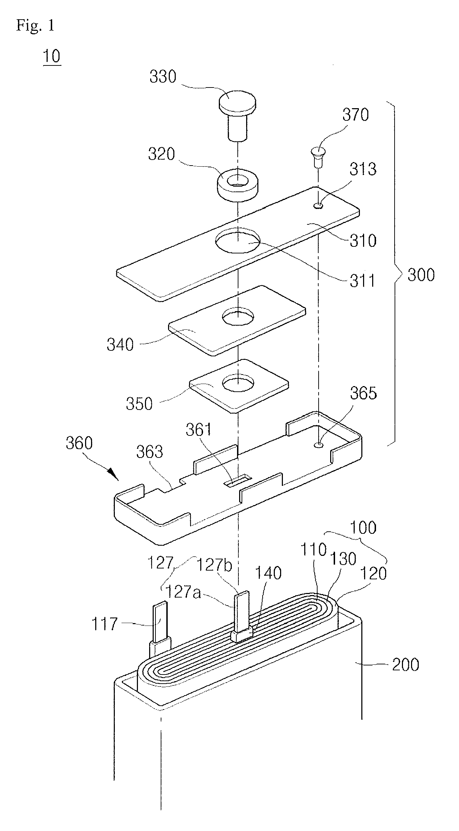

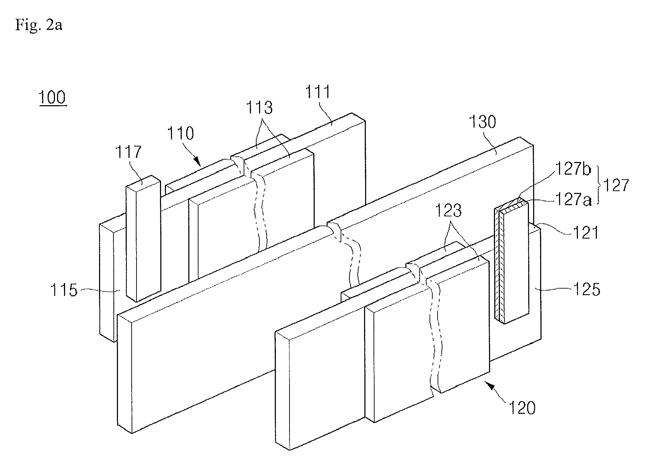

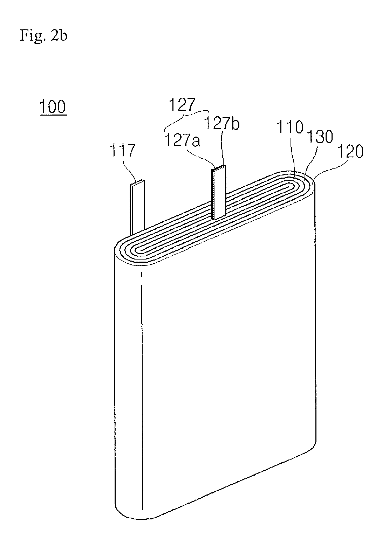

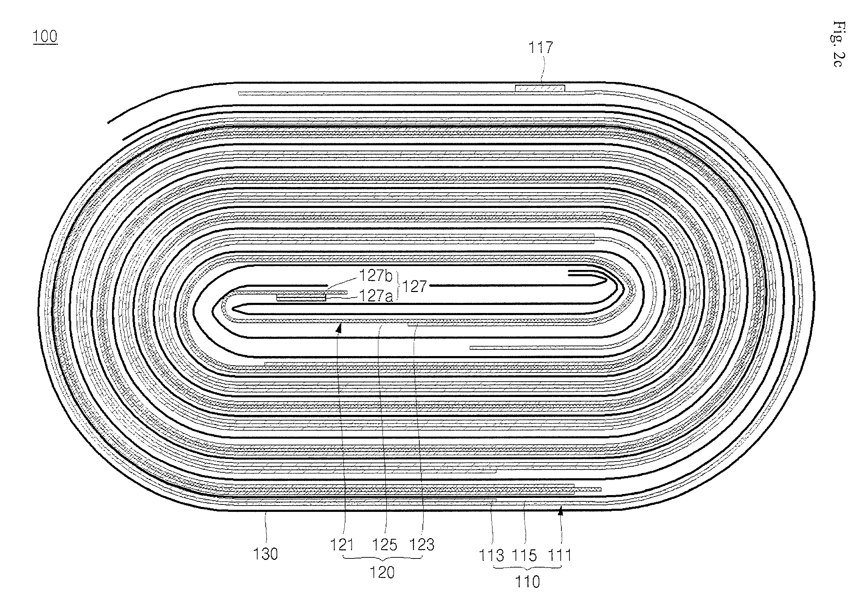

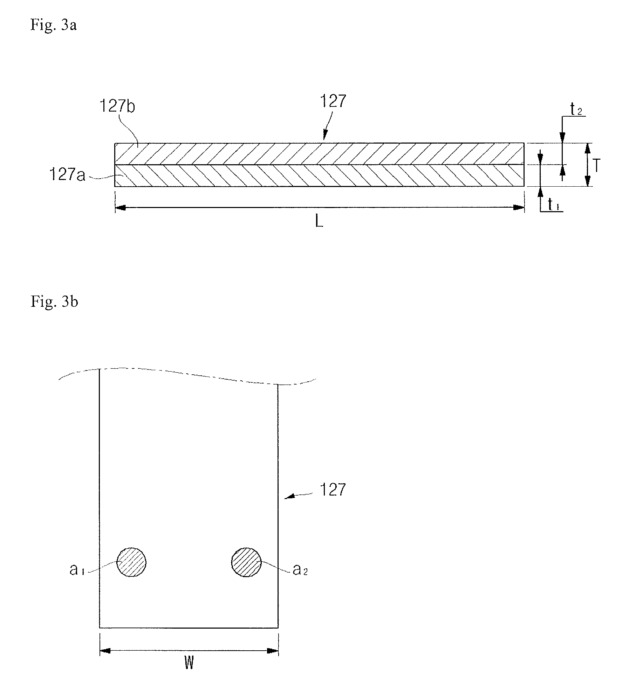

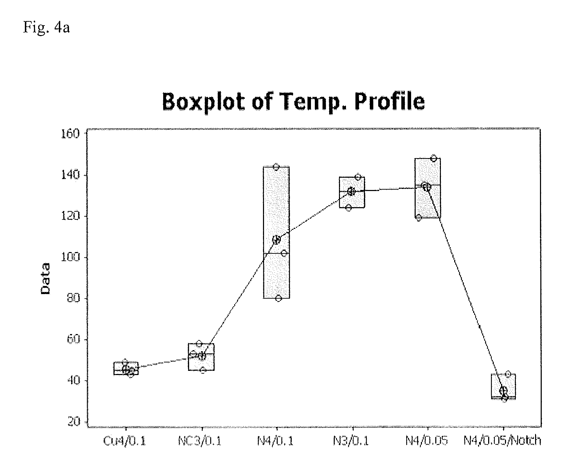

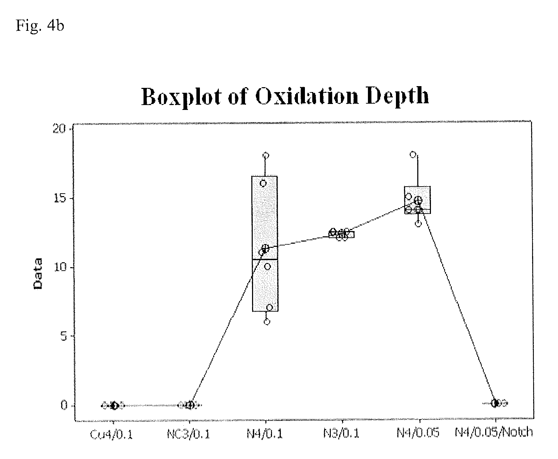

FIG. 1 is an exploded perspective view of a lithium secondary battery in accordance with an embodiment of the present invention. FIGs. 2a and 2b are perspective views of an unwound and a wound electrode assembly in accordance with an embodiment of the present invention, respectively. FIG. 2c is a plan view of an electrode assembly in accordance with an embodiment of the present invention. FIG. 3a is a side view of a negative electrode tab in accordance with an embodiment of the present invention, and FIG. 3b is a side plan view of a negative electrode tab in accordance with an embodiment of the present invention. Finally, FIG. 4a is a graph showing the relationship between kinds of negative electrode tabs and a heat generation temperature, and FIG. 4b is a graph showing the relationship between kinds of negative electrode tabs and a depth of thermal oxidation.

Referring to FIGS. 1 to 3b, a lithium secondary battery 10 in accordance with an embodiment of the present invention includes an electrode assembly 100, a can 200 and a cap assembly 300. The electrode assembly 100 further includes a clad negative electrode tab 127 having a bilayer structure of nickel (Ni) 127a and copper (Cu) 127b. The clad negative electrode tab 127 is a negative electrode tab with improved electrical properties compared to a conventional negative electrode tab. More specifically, an embodiment of the present invention provides a lithium secondary battery 10 having improved short-circuit characteristics at high temperatures and includes the clad negative electrode tab 127 as a negative electrode tab of the lithium secondary battery 10.

The electrode assembly 100 includes a positive electrode plate 110, a negative electrode plate 120 and a separator 130. In order to increase electrical capacity, the electrode assembly 100 is conventionally fabricated into a jelly roll structure by stacking the positive electrode plate 110, the negative electrode plate 120 and the separator 130 between the electrode plates to provide electrical isolation between the electrode plates, and winding the stacked structure into a jelly roll.

The positive electrode plate 110 includes a positive electrode current collector 111, a positive electrode active material layer 113, a positive electrode uncoated portion 115 and a positive electrode tab 117. The positive electrode current collector 111 may comprise thin aluminum (Al) foil. The positive electrode active material layer 113 may be coated on portions of both sides of the positive electrode current collector 111 and may comprise lithium manganese oxide having high stability. In one embodiment, the positive electrode uncoated portion 115 is defined as a region of the positive electrode current collector 111 which is absent the positive electrode active material layer 113. The positive electrode uncoated portion 115 may be formed near both ends of the positive electrode current collector 111. The positive electrode tab 117 is configured to be fixed to the positive electrode uncoated portion 115. For electrical connection with the cap assembly 300, one end of the positive electrode tab 117 is protrudes from the positive electrode current collector 111, and in one embodiment is configured to protrude from an outer periphery of the electrode jelly roll structure. The positive electrode tab 117 may comprise, for example, aluminum (Al) or nickel (Ni). A portion of the positive electrode tab 117 may be wound with an insulating tape 140 to prevent an electrode-to-electrode short circuit.

The negative electrode plate 120 includes a negative electrode current collector 121, a negative electrode active material layer 123, a negative electrode uncoated portion 125 and a clad negative electrode tab 127, The negative electrode current collector 121 is formed of thin copper (Cu) foil. The negative electrode active material layer 123 is coated on portions of both sides of the negative electrode current collector 121 and may comprise a carbon material. The negative electrode uncoated portion 125 is defined as a region of the negative electrode current collector 121 that is absent the negative electrode active material layer 123 and in one embodiment is formed near both ends of the negative electrode current collector 121. The clad negative electrode tab 127 is configured to be fixed to the negative electrode uncoated portion 125. For electrical connection with the cap assembly 300, one end of the clad negative electrode tab 127 protrudes from the negative electrode current collector 121. A portion of the clad negative electrode tab 127 may be wound with an insulating tape 140 to prevent of a short circuit between the electrodes. Further, the clad negative electrode tab 127 may protrude from an inner periphery of the electrode jelly roll structure.

Hereinafter, a clad negative electrode tab in accordance with an embodiment of the present invention will be described in more detail.

The clad negative electrode tab 127 may comprise a bilayer structure of two metals, such as nickel (Ni) 127a and copper (Cu) 127b. In one embodiment, the clad negative electrode tab 127 is formed by pressure welding of Ni 127a and Cu 127b. Ni 127a is a metal material having a resistance/unit sectional area that is about 4 times greater than Cu 127b. Therefore, when the clad negative electrode comprises Ni 127a and Cu 127b, the presence of Cu 127b results in lowering resistance of the electrode tab. More specifically, resistance of the electrode tab can be reduced to about 50% of a conventional negative electrode tab formed of Ni or a Ni-containing alloy. According to an embodiment of the present invention, the clad negative electrode tab 127 may exhibit a resistance value of 2.0 to 5.0 mΩ that may correspond to a 50% reduction of the tab resistance compared to a negative electrode tab having a Ni 127a monolayer with the same sectional area that typically exhibits a resistance value of about 7.5 mΩ. That is, the clad negative electrode tab 127 provides reduced heat generation due to decreased resistance compared to a conventional negative electrode tab. As a result, high-temperature short circuit characteristics of the lithium secondary battery 10 may be improved. The reason why the negative electrode tab is not formed of only low-resistance Cu 127b is as follows. When the electrode assembly 100 or the cap assembly 300 is welded to the negative electrode tab, the Cu component is melted by heat. If a large amount of Cu 127b is present, spattering of Cu particles may occur upon melting of Cu, which consequently results in a micro short circuit of the lithium secondary battery 10 by the spattered particles.

In one embodiment, the clad negative electrode tab 127 has a length (L) of between about 10 to 50 mm. If a length (L) of the clad negative electrode tab 127 is shorter than 10 mm, it may be difficult to locate a welding region on which to weld the negative electrode tab 127 to a negative electrode uncoated portion 125 of the negative electrode plate 120 or to a terminal plate 350 of the cap assembly 300. If a length (L) of the clad negative electrode tab 127 is longer than about 50 mm, there is a greater likelihood of a short circuit due to contact of the electrode tab 127 with the cap plate 310 or with the positive electrode tab 117. Further, since the resistance of an ohmic conductor is proportional to its length, there is no reason for a clad negative electrode tab 127 to be larger than about 50 mm.

In one embodiment, the clad negative electrode tab 127 has a thickness (T) of between about 0.05 to 0.15 mm. If a thickness (T) of the clad negative electrode tab 127 is thinner than 0.05 mm, the tab 127 may fracture when it is welded or when it is folded several times in the process of inserting and housing the electrode assembly into the can. If a thickness (T) of the clad negative electrode tab 127 is thicker than 0.15 mm, welding the tab to the negative electrode uncoated portion 125 of the negative electrode plate 120 or to the terminal plate 350 of the cap assembly 300 may be difficult and/or take a long time. As described above, the clad negative electrode tab 127 is inevitably folded several times during the process of inserting and housing the electrode assembly into the can. Therefore, when the clad negative electrode tab 127 has a thickness (T) of more than 0.15 mm, such a large thickness (T) results in decreased flexibility that may in turn lead to difficulty of installation.

Further, in one embodiment, the clad negative electrode tab 127 has a width (W) of between about 2.0 to 5.0 mm. During welding to the negative electrode uncoated portion 125 of the negative electrode plate 120 or with the terminal plate 350 of the cap assembly 300, the clad negative electrode tab 127 is welded at two or more weld points. Therefore, if a width (W) of the clad negative electrode tab 127 is narrower than 2.0 mm, it may be difficult to secure a welding location. On the other hand, if a width (W) of the clad negative electrode tab 127 is wider than 5.0 mm, the welding may require more weld points to secure the tab, therefore adding extra steps and taking more time, thus lowering the production capability.

Each layer of Ni 127a and Cu 127b may comprise between about 5% to 95% of the thickness of the clad negative electrode tab 127. For example, when the Ni layer 127a comprises 5% of the thickness of the clad negative electrode tab 127, the Cu layer 127b may comprise 95% of the thickness. Similarly, when the Ni layer 127a comprises 95% of the thickness of the clad negative electrode tab 127, the Cu layer 127b may comprise 5% of the thickness. If the Ni layer 127a is less than 5% of the total thickness and the Cu layer 127b accounts for more than 95% of the total thickness, the excessive amount of Cu 127b may cause problems associated with spattering of Cu 127b during welding. On the other hand, if the Cu layer 127b is less than 5% of the total thickness and the Ni layer 127a accounts for more than 95% of the thickness, it is difficult to achieve a desired reduction of resistance. Therefore, a proportion of the as-formed thicknesses (t1, t2) of Ni 127a and Cu 127b should be considered in view of the desired resistance and risk of spattering of the clad negative electrode tab 127. In one embodiment, the Ni layer 127a and the Cu layer 127b have the same thickness.

One end of the clad negative electrode tab 127 may be welded to the negative electrode plate 120, whereas the other end of the clad negative electrode tab 127 may be welded to the cap assembly 300. More specifically, when the negative electrode uncoated portion 125 of the negative electrode plate 120 is welded to one end of the Cu layer 127b of the clad negative electrode tab 127, a welding rod contacts the Ni layer 127a. Further, when the terminal plate 350 of the cap assembly 300 is welded to the other end of the Cu layer 127b of the clad negative electrode tab 127, a welding rod contacts the Ni layer 127a. As described above, welding of the clad negative electrode tab 127 with the negative electrode plate 120 or the cap assembly 300 may be carried out using any conventional method such as ultrasonic welding, laser welding, or resistance welding.

In order to improve the bonding strength upon welding with the negative electrode plate 120 or the cap assembly 300, the clad negative electrode tab 127 may be welded at at least two weld points (a1, a2). When the spacing between two weld points a1 and a2 is relatively small, there is no significant difference compared to single-point welding. Therefore, in one embodiment the weld points (a1, a2) are spaced relatively far apart on the clad negative electrode tab 127. Of course, additional weld points may also be used to further improve the bonding strength between the clad negative electrode tab 127 and the negative electrode plate 120 or the cap assembly 300.

The separator 130 prevents a short circuit between the positive electrode plate 110 and the negative electrode plate 120, and serves as a migration path for lithium ions.

In one embodiment, the separator 130 is formed of polyethylene or polypropylene, but the separator is not limited those materials.

In a polygonal secondary battery, the metal can 200 has a generally rectangular parallelepiped shape and an open-end for containing the electrode assembly 100 and the electrolyte. The can may be formed by a processing method such as deep diawing. In one embodiment, the can 200 may comprise an aluminum alloy, aluminum, or another lightweight conductive metal. Therefore, the can 200 may also serve as a terminal for the battery. The open end allows insertion of the electrode assembly 100 and is hermetically sealed by the cap assembly 300.

The cap assembly 300 includes a cap plate 310, a gasket 320, an electrode terminal 330, an insulation plate 340, a terminal plate 350, an insulating case 360 and a plug 370.

The cap plate 310 includes a terminal through-hole 311 that provides a path through which the electrode terminal 330 is inserted and an electrolyte injection hole 313. For insulation of the metallic cap plate 310 from the electrode terminal 330, the electrode terminal 330 is inserted into the terminal through-hole 311 after the gasket 320 made of an insulating material is positioned around an exterior surface of the electrode terminal 330. One side of the cap plate 310 includes the electrolyte injection hole 313 to allow injection of an electrolyte into the can 200. After injection of the electrolyte is complete, the electrolyte injection hole 313 is sealed with a plug 370 to prevent leakage of the electrolyte.

The insulating plate 340 is installed adjacent the cap plate 310 on an interior of the battery, and a terminal plate is located adjacent the insulating plate 340. Therefore, the insulating plate 340 provides insulation between the cap plate 310 and the terminal plate 350. The terminal plate 350 is coupled with a lower end of the electrode terminal 330. Therefore, the negative electrode plate 120 of the electrode assembly 100 is electrically connected to the electrode terminal 330 through the clad negative electrode tab 127 and the terminal plate 350. The positive electrode plate 110 of the electrode assembly 100 is electrically connected to the cap plate 310 or the can 200 through the positive electrode tab 117.

The insulating case 360 is installed adjacent the terminal plate 350. The insulating case 360 includes a negative electrode tab pass-through portion 361, a positive electrode tab pass-through portion 363 and an electrolyte inlet 365.

The plug 370 is used to hermetically seal the electrolyte injection hole 313 after injection of the electrolyte into the hole 313 formed on the cap plate 310. As an alternative to the plug 370, a ball may be press-fitted to seal the electrolyte injection hole 313.

As described above, the lithium secondary battery 10 in accordance with embodiments of the present invention includes a clad negative electrode tab 127 having a bilayer structure of Ni 127a and Cu 127b. The clad negative electrode tab 127 exhibits lower resistance compared a conventional tab. Therefore, according to embodiments of the present invention, it is possible to improve high-temperature short circuit characteristics of the lithium secondary battery 10. More specifically, resistance of the lithium secondary battery 10 can be decreased, thereby resulting in reduction of heat generation in the lithium secondary battery 10 and significantly reducing the risk of explosion and/or malfunction of the secondary battery.

Table 1 shows the resistance, resistivity, heat generation temperature and thermal oxidation depth measured for individual metals used as an electrode tab material. FIGS. 4a and 4b graphically show the measured values of Table 1 as explained in more detail below.

**Table 1**

| | | Spec. | Tab IR [mmΩ] | Resistivity [Ω·m] | Temp. [°C] | Oxidation depth [mm] |
|---|---|---|---|---|---|---|
| Embodiment 1 | Ni/Cu clad | L: 3 mm T: 0.1mm | 3.3 | 2.52E-8 | 52.0 | 0.0 |
| Comp. Ex. 1 | Cu tab | L: 4 mm T: 0.1 mm | 1.6 | 1.72E-8 | 45.7 | 0.0 |
| Camp. Ex. 2 | Ni tab | L: 4 mm | 7.5 | 9.13E-8 | 108.7 | 11.3 |
| | | T: 0.1mm | | | | |
| Comp. Ex. 3 | Ni tab | L: 3 mm | 11.5 | 8.86E-8 | 124.3 | 12.0 |
| | | T: 0.1mm | | | | |
| Comp. Ex. 4 | Ni tab | L: 4 mm | 14.3 | 11.1E-8 | 134.0 | 14.7 |
| | | T: 0.05mm | | | | |
| Comp. Ex. 5 | Ni tab | L: 4 mm | 16.8 | 13.0E-8 | 35.3 | 0.0 |
| | | T: 0.05mm (notch) | | | | |

In Table 1 above, Embodiment 1 shows the internal resistance, resistivity, heat generation temperature and oxidation depth measured for the clad negative electrode tab 127 having a bilayer structure of Ni 127a and Cu 127b. Comparative Example 1 shows the internal resistance, resistivity, heat generation temperature and oxidation depth measured for a pure Cu electrode tab, whereas Comparative Examples 2 to 5 show the internal resistance, heat generation temperature and oxidation depth of a pure Ni electrode tab with respect to length (L) and thickness (T) thereof, in conjunction with resistivity of tab materials.

The clad negative electrode tab 127 of Embodiment 1 exhibited lower resistance and resistivity compared to the Ni electrode tabs of Comparative Examples 2 to 4. Further, the clad negative electrode tab 127 of Embodiment 1 exhibited a relatively low heat generation temperature compared to the Ni electrode tabs of Comparative Examples 2 to 4. Further, the clad negative electrode tab 127 of Embodiment 1 exhibits substantially no formation of a thermal oxide film that forms on electrode plate surfaces in batteries using tabs where heat generation temperature is higher due to greater resistance of the tab.

The Cu electrode tab of Comparative Example 1 exhibited low resistance and resistivity values, leading to minimal heat generation and a substantially nonexistent thermal oxide film layer. However, as discussed above, the electrode tab made only of Cu was not employed due to the potential problem of copper scattering.

On the other hand, Comparative Example 5 shows the internal resistance, heat generation temperature and oxide depth measured for the Ni electrode tab with formation of a notch. The Ni electrode tab of Comparative Example 5 exhibited a relatively low heat generation temperature and no formation of a thermal oxide, but had a disadvantage of high resistance.

Although embodiments of the present invention have been disclosed for illustrative purposes, those skilled in the art will appreciate that various modifications, additions and substitutions are possible, without departing from the scope of the invention as disclosed in the accompanying claims.

## Claims

1. An electrode assembly for a secondary battery that has a cap assembly, the electrode assembly comprising:
a first electrode plate, a second electrode plate and a separator between the first electrode plate and the second electrode plate, the first electrode plate having a coated portion coated with an active material and an uncoated portion on which the active material is not coated; and
an electrode tab for electrically connecting the uncoated portion of the first electrode plate to the cap assembly, the electrode tab having a bilayer structure comprising a copper layer and a nickel layer.

2. The electrode assembly of claim 1, wherein the copper layer is pressure-welded to the nickel layer.

3. The electrode assembly of claim 1 or 2, wherein the electrode tab is a clad electrode tab.

4. The electrode assembly of claim 1, 2 or 3, wherein the electrode tab exhibits a resistance from about 2.0 to 5.0 mΩ.

5. The electrode assembly of any one of the preceding claims, wherein a thickness of the electrode tab comprises between about 5% to 95% copper and between about 5% and 95% nickel.

6. The electrode assembly of any one of the preceding claims, wherein a thickness of the electrode tab comprises about 50% copper and about 50% nickel.

7. The electrode assembly of any one of the preceding claims, wherein a thickness of the electrode tab is between about 0.05 mm to 0.15 mm.

8. The electrode assembly of any one of the preceding claims, wherein the electrode tab extends substantially parallel to the first electrode plate of the electrode assembly.

9. The electrode assembly of any one of the preceding claims, wherein a thickness of the copper layer is substantially the same as a thickness of the nickel layer.

10. The electrode assembly of any one of the preceding claims, wherein the electrode tab is welded to the uncoated portion of the first electrode plate so that the copper layer of the electrode tab contacts the uncoated portion of the first electrode plate.

11. A secondary battery, comprising:
a can;
a cap assembly for sealing the can; and
an electrode assembly according to any one of the preceding claims disposed in the can.
